# EUROPÄISCHE PATENTSCHRIFT

(11) **EP 2 558 307 B1**
(45) Veröffentlichungstag und Bekanntmachung des Hinweises auf die Patenterteilung: **06.08.2014**
(21) Anmeldenummer: 11707634.9
(22) Anmeldetag: 01.03.2011
(51) Int. Cl.: B60B 27/00, B60K 17/30

(54) **RADLAGEREINHEIT EINES ANGETRIEBENEN FAHRZEUG-RADES**
WHEEL BEARING UNIT OF A DRIVEN VEHICLE WHEEL
ENSEMBLE DE ROULEMENT D'UNE ROUE MOTRICE DE VÉHICULE

(30) Priorität: 13.04.2010 DE 102010003933
(43) Veröffentlichungstag der Anmeldung: 20.02.2013
(73) Patentinhaber: Bayerische Motoren Werke Aktiengesellschaft, 80809 München (DE)
(72) Erfinder: KÖNIG, Roland, 82392 Habach (DE); DAUN, Nico, 80639 München (DE)
(86) Internationale Anmeldenummer: PCT/EP2011/053016
(87) Internationale Veröffentlichungsnummer: WO 2011/128145

(56) Entgegenhaltungen:
- DE-A1- 1 902 942
- DE-A1-102008 003 646
- US-A- 2 547 435

## Beschreibung

Die Erfindung betrifft eine Radlagereinheit nach dem Oberbegriff des Anspruchs 1. Zum Stand der Technik wird neben der WO 2008/107288 A1 und der DE 44 41 631 C1 sowie der DE 19 02 942 A auf die quasi den nächstkommenden Stand der Technik zeigende US 2,547,435 verwiesen.

Die übliche Bauart von Radlagereinheiten von Personenkraftwagen mit sog. Gleichlaufgelenken zeigt die vorhergehend erstgenannte Schrift. Dabei liegt das Gleichlaufgelenk in Fahrzeug-Querrichtung betrachtet näher an der Fahrzeug-Mitte (= Mitten-Längsachse des Fahrzeugs) als das Radlager, d.h. bezüglich der Fahrzeug-Mitte liegt das Gleichlaufgelenk üblicherweise innerhalb des Radlagers. Da der Beugewinkel des Gleichlaufgelenks sowie des am anderen Ende der Abtriebswelle als Übergang in ein Differential oder dgl. vorgesehen Gelenks begrenzt ist, kann es sich insbesondere bei einer relativ kurzen Abtriebswelle, die beispielsweise bei Fahrzeugen mit geringer Spurweite oder bei Fahrzeugen mit einem in der Achse vorgesehenen elektrischen Antriebsmotor vorliegen kann, ergeben, dass ein gewünschter großer Radhub, den das Rad in Vertikalrichtung ausführen können sollte, nicht darstellbar ist.

Beispielsweise für einen solchen Fall kann das Gleichlaufgelenk weiter außen (in Fahrzeug-Querrichtung betrachtet und auf die Fahrzeug-Mitte bezogen) und insbesondere außerhalb des Radlagers angeordnet werden, so wie dies beispielsweise in den weiteren eingangs genannten Schriften gezeigt ist. Damit ist eine längere Abtriebswelle und mit einer solchen trotz begrenztem Beugewinkel der Gelenke ein größerer Radhub darstellbar.

An einer solchen, neben der genannten DE 44 41 631 C1 auch in der DE 19 02 942 A gezeigten Radlagereinheit erfolgt jedoch ein verbesserungswürdiger Kraftflussverlauf. Bei diesem bekannten Stand der Technik erfolgt nämlich der Kraftfluss zwischen der Fahrbahn und dem Radträger des Fahrwerks ausgehend von der Rad-Felge über die Speichen des Rades und die Radschrauben über einen sog. Mitnehmerflansch, der mit dem äußeren Gelenkkörper des Gleichlaufgelenks verbunden ist und zumindest einen Teil der Radnabe bildet, in den inneren Ring des Radlagers hinein, welches üblicherweise zwei nebeneinander liegenden Kugelreihen, die allgemein als zwei Gruppen von Wälzkörpern bezeichnet werden können, aufweist. Bei der Weiterleitung dieser Kraft im Radlager in dessen äußeren Ring hinein, der am Radträger abgestützt ist, wird die bezüglich der Fahrzeug-Mitte äußere KugelReihe des Radlagers, die die Kraft über einen relativ geringen Querschnitt überträgt, am stärksten beansprucht. Wie geschildert erfährt der Kraftfluss nämlich eine Umlenkung um 180°, indem die Kraft von der Rad-Felge in Radialrichtung betrachtet zunächst nach innen (zur Rad-Drehachse hin) und daraufhin im Radlager wieder nach außen geleitet wird.

Demgegenüber günstiger ist eine in der eingangs letztgenannten US 2,547,435 gezeigte Radlagereinheit, bei welcher zwar anstelle eines Gleichlaufgelenks ein Kardangelenk vorgesehen ist, jedoch ist der verwendete Gelenktyp für die Art des Kraftflussverlaufs zunächst unerheblich. Bei diesem Stand der Technik ergibt sich nämlich keine ungünstige Richtungsumkehr im Kraftfluss zwischen der Fahrbahn und dem Radträger, denn der Kraftfluss erfolgt ausgehend von der Rad-Felge über die Speichen in die Nabe und den äußeren Ring des Radlagers und von diesem über die Kugeln oder allgemein Wälzkörper des Radlagers weiter in Radialrichtung nach innen in den inneren Ring des Radlagers, welcher am Radträger abgestützt ist. Mit diesem günstigeren Kraftfluss-Verlauf können die betroffenen Bauteile, nämlich insbesondere die Nabe der Radlagereinheit, von welcher der äußere Ring des Radlagers und/oder der sog. Mitnehmerflansch bzw. Fortsatz des äußeren Gelenkkörpers des Gleichlaufgelenks ein Bestandteil sein kann, kraftflussoptimiert und somit relativ dünnwandig und damit leicht gestaltet sein. Ein geringes Bauteilgewicht ist bekanntlich bei den sog. ungefederten Massen, zu denen die Radlagereinheit gehört, ein anzustrebendes Kriterium.

Jedoch kann eine solche Radlagereinheit hinsichtlich des Bauraumbedarfs weiter verbessert werde, was hiermit aufgezeigt werden soll (= Aufgabe der vorliegenden Erfindung).
Die Lösung dieser Aufgabe ist dadurch gekennzeichnet, dass Radschrauben zur Befestigung des Rades an einer mit dem äußeren Radlager-Ring und dem äußeren Gelenkkörper zusammen hängenden Nabe in Radialrichtung betrachtet außerhalb der äußeren Wälzkörpergruppe liegen und sich mit ihrem Endabschnitt in Radialrichtung betrachtet mit dieser überdecken. Damit ergibt sich eine besonders kompakte und somit Bauraum sparende Anordnung.

Wenn weiterhin der innere Ring des Radlagers sich zur Fahrzeugmitte hin konisch erweiternd ausgeführt ist, so dass eine bezogen auf die Mitten-Längsachse des Fahrzeugs innere Wälzkörper-Gruppe auf einem größeren Durchmesser des inneren Radlager-Rings läuft als eine äußere Wälzkörper-Gruppe des Radlagers, so stellt jedenfalls das Radlager bzw. der hieran geeignet angepasste Radträger kein Hindernis in dem Bestreben, einen möglichst großen Beugewinkel der Abtriebswelle zu ermöglichen, dar. Schließlich kann im Hinblick auf einen besonders einfachen Zusammenbau die Nabe mit dem äußeren Ring des Radlagers und/oder mit dem äußeren Gelenkkörper des Gleichlaufgelenks eine Baueinheit bilden.

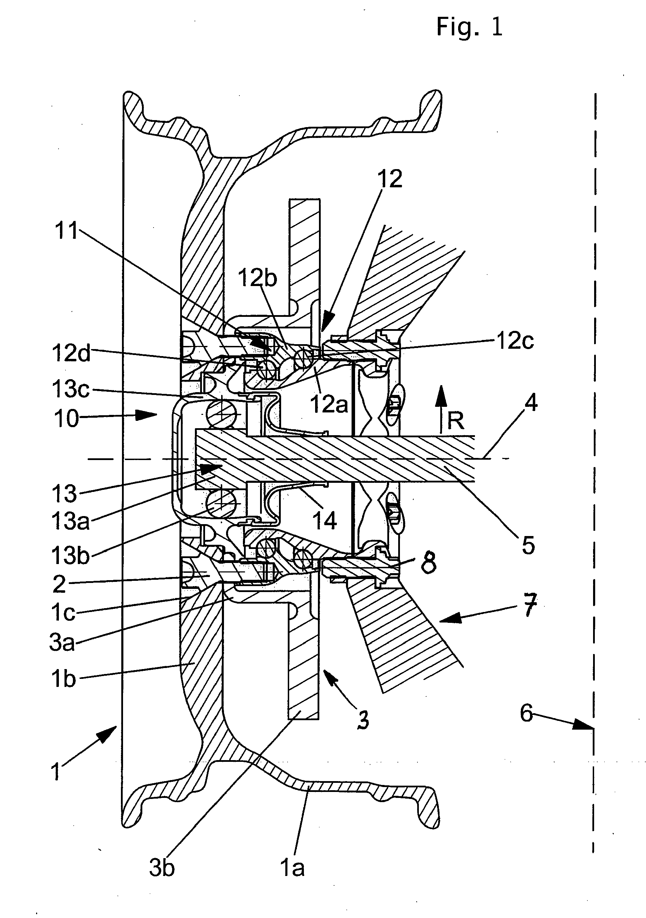

Im folgenden wird die Erfindung anhand eines bevorzugten Ausführungsbeispieles weiter erläutert, wobei die beigefügte einzige Figur einen Schnitt durch ein Fahrzeug-Rad mit erfindungsgemäßer Radlagereinheit zeigt.

Mit der Bezugsziffer 1 ist das Rad eines Personenkraftwagens gekennzeichnet, auf dessen Felge 1 a ein nicht dargestellter Reifen aufziehbar ist. Die Felge 1a ist wie üblich über Speichen 1b, die in einem Nabenteil 1c des Rades 1 münden, auf der sog. Nabe 11 einer in ihrer Gesamtheit mit der Bezugsziffer 10 gekennzeichneten Radlagereinheit abgestützt, wobei das Rad 1 wie üblich mittels mehrerer Radschrauben 2 an der Nabe 11 befestigt ist. Dabei durchdringen diese Radschrauben 2 auch Bohrungen im sog. Brenisscheibentopf 3a einer in ihrer Gesamtheit mit der Bezugsziffer 3 gekennzeichneten Bremsscheibe, deren Scheibenkörper die Bezugsziffer 3b trägt.

Ein Bestandteil der Radlagereinheit 10 ist weiterhin ein Radlager 12, über welches die Nabe 11 auf einem nur zu einem kleinen Teil dargestellten Radträger 7 um die Rad-Drehachse 4 drehbar gelagert ist, wobei der Radträger 7 ein Bestandteil der Radaufhängung im Fahrwerk des Fahrzeugs ist und wie üblich über mehrere nicht dargestellte Lenker letztlich am Fahrzeug-Aufbau aufgehängt ist. Das genannte Radlager 12 besteht aus einem in Radialrichtung R bezüglich der Rad-Drehachse 4 betrachtet inneren Radlager-Ring 12a und einem äußeren Radlager-Ring 12b, zwischen denen hier in Richtung der Rad-Drehachse 4 (und somit in Fahrzeug-Querrichtung) betrachtet nebeneinander zwei Gruppen von Wälzkörpern 12c, 12d - hier jeweils in Form von Kugeln - geführt sind. Dabei ist der innere Radlager-Ring 12a auf dem Radträger 7 abgestützt bzw. mittels Schrauben 8 an diesem befestigt, während der äußere Radlager-Ring 12b mit der Nabe 11 verbunden ist. Es kann die Nabe 11 in den äußeren Ring 12b des Radlagers 12 übergehen, falls diese beiden Bauteile eine Baueinheit bilden oder es ist eine geeignete drehfeste Verbindung zwischen diesen beiden Elementen vorgesehen.

Ein weiterer Bestandteil der Radlagereinheit 10 ist ein dem Fachmann bekanntes Gleichlaufgelenk 13, über welches das Rad 1 mittels einer Abtriebswelle 5 antreibbar, d.h. um die Rad-Drehachse 4 in Rotation versetzbar ist. Dieses in der Figur stark vereinfacht dargestellte Gleichlaufgelenk 13 ist über einen mit einem Endabschnitt an der Abtriebswelle 5 anliegenden Dichtungsbalg 14 gegenüber der Umgebung abgedichtet und besteht unter anderem aus einem mit der Abtriebswelle 5 drehfest verbundenen Innengelenkkörper 13a, mehreren auf diesem abwälzenden Kugelsegmenten 13b und einem (in Radialrichtung R betrachtet) äußeren Gelenkkörper 13c. Der hier becherförmig gestaltete äußere Gelenkkörper 13c geht in die Nabe 11 über, falls diese beiden Bauteile eine Baueinheit bilden oder es ist der äußere Gelenkkörper 13c mit der Nabe 11 drehfest verbunden, falls es sich bei diesen beiden Bauteilen um jeweils eigenständige Bauelemente handelt. Wie ersichtlich liegt das Gleichlaufgelenk 13 in Richtung der Rad-Drehachse 4 und somit in Querrichtung des Fahrzeugs betrachtet bezüglich der durch die Mitten-Längsachse 6 des Fahrzeugs dargestellten und in der Figur rechtsseitig des Rades 1 liegenden Fahrzeug-Mitte außerhalb des Radlagers 12, d.h. weiter als das Radlager 12 von der Mitten-Längsachse 6 beabstandet.

Mit der soweit beschriebenen Anordnung ergibt sich der vor der Figurenbeschreibung erläuterte Vorteil eines günstigen Kraftfluß-Verlaufs von der Fahrbahn über die Felge 1a zum Radträger 7. Dieser günstige KraftflußVerlauf gestattet es, die betroffenen Bauelemente dünnwandig und somit gewichtsoptimiert zu gestalten. Wie weiterhin vor der Figurenbeschreibung bereits ausgeführt wurde ist der innere Ring 12a des Radlagers 12 sich zur in der Figurendarstellung rechtsseitig liegenden Fahrzeugmitte 6 hin konisch erweiternd ausgeführt, so dass die bezogen auf die Mitten-Längsachse 6 des Fahrzeugs innere Wälzkörper-Gruppe 12c auf einem größeren Durchmesser des inneren Radlager-Rings 12a läuft als die bezogen auf die Fahrzeug-Mitte äußere Wälzkörper-Gruppe 12d des Radlagers 12. Erfindungsgemäß liegen wie ersichtlich die Radschrauben 2 in Radialrichtung R betrachtet außerhalb der äußeren Wälzkörpergruppe 12d und überdecken sich bei Betrachtung in Radialrichtung R mit ihrem Endabschnitt mit dieser bezüglich der Fahrzeug-Mitte 6 äußeren Wälzkörpergruppe 12d.

## Patentansprüche

1. Radlagereinheit eines über eine Abtriebswelle (5) angetriebenen FahrzeugRades (1), mit einem bezüglich der Fahrzeug-Mitte (6) außerhalb eines Radlagers (12), das einen inneren Ring (12a) und einen äußeren Ring (12b) sowie zwischen diesen geführte Wälzkörper (12c, 12d) aufweist, vorgesehenen Gleichlaufgelenk (13) für die Abtriebswelle (5), dessen in Radialrichtung (R) betrachtet äußerer Gelenkkörper (13c) jeweils direkt oder indirekt sowohl das Fahrzeug-Rad (1) trägt als auch über das Radlager (12) auf einem Radträger (7), der einen Bestandteil des Fahrzeug-Fahrwerks bildet, abgestützt ist, der äußere Gelenkkörper (13c) mit dem in Radialrichtung (R) betrachtet äußeren Ring (12b) des Radlagers (12) verbunden ist, während der innere Ring (12a) des Radlagers (12) am Radträger (7) abgestützt ist,
**dadurch gekennzeichnet, dass** Radschrauben (2) zur Befestigung des Rades (1) an einer mit dem äußeren Radlager-Ring (12b) und dem äußeren Gelenkkörper (13c) zusammen hängenden Nabe (11) in Radialrichtung (R) betrachtet außerhalb einer äußeren Wälzkörper-Gruppe (12d) liegen und sich mit ihrem Endabschnitt in Radialrichtung (R) betrachtet mit dieser überdecken.

2. Radlagereinheit nach Anspruch 1 mit zumindest einem der folgenden Merkmale:
• der innere Ring (12a) des Radiagers (12) ist sich zur Fahrzeugmitte (6) hin konisch erweiternd ausgeführt, so dass eine bezüglich der Fahrzeug-Mitte (6) innere Wälzkörper-Gruppe (12c) auf einem größeren Durchmesser des inneren Radlager-Rings (12a) läuft als die äußere Wälzkörper-Gruppe (12d)
• die Nabe (11) bildet mit dem äußeren Radlager-Ring (12b) und/oder mit dem äußeren Gelenkkörper (13c) des Gleichlaufgelenks (13) eine Baueinheit.

## Claims

1. A wheel bearing unit of a vehicle wheel (1) driven by an output shaft (5), with a constant velocity joint (13) which, with respect to the vehicle centre (6), is provided outside a wheel bearing (12), which has an inner ring (12a) and an outer ring (12b) as well as rolling bodies (12c, 12d) guided between them, for the output shaft (5), the outer joint body (13c) of which, viewed in the radial direction (R), in each case directly or indirectly both carries the vehicle wheel (1) and is also supported by means of the wheel bearing (12) on a wheel carrier (7), which forms a component of the vehicle chassis, the outer joint body (13c) is connected to the outer ring (12b), viewed in the radial direction (R), of the wheel bearing (12), while the inner ring (12a) of the wheel bearing (12) is supported on the wheel carrier (7), **characterised in that** wheel bolts (2) to fasten the wheel (1) on a hub (11), which is connected to the outer wheel bearing ring (12b) and the outer joint body (13c), viewed in the radial direction (R), are located outside an outer rolling body group (12d) and overlap the latter with their end portion, viewed in the radial direction (R).

2. A wheel bearing unit according to claim 1 with at least one of the following features:
• the inner ring (12a) of the wheel bearing (12) is configured to conically widen toward the vehicle centre (6), so that an inner rolling body group (12c), with respect to the vehicle centre (6), runs on a larger diameter of the inner wheel bearing ring (12a) than the outer rolling bearing group (12d)
• the hub (11), with the outer wheel bearing ring (12b) and/or with the outer joint body (13c) of the constant velocity joint (13), forms a structural unit.

## Revendications

1. Unité de palier d'une roue de véhicule (1) actionnée par un arbre de sortie comportant un joint homocinétique (13) pour l'arbre de sortie (5) situé par rapport au milieu (6) du véhicule à l'extérieur d'un palier de roue (12) qui comporte une bague interne (12a) et une bague externe (12b) ainsi que des corps de roulement (12c, 12d) montés entre ces bagues, et dont le corps d'articulation externe (13c) dans la direction radiale (R) porte directement ou indirectement la roue (1) du véhicule, et s'appuie par l'intermédiaire du palier de roue (12) sur un support de roue (7) qui forme un élément de la carrosserie du véhicule, le corps d'articulation externe (13c) étant relié à la bague externe (12b) du palier de roue (12) dans la direction radiale (R) tandis que la bague interne (12a) du palier de roue (12) s'appuie sur le support de roue (7), **caractérisée en ce que**
des vis de roue (2) permettant de fixer la roue (1) sur un moyeu (11) lié à la bague du palier de roue externe (12b) et au corps d'articulation externe (13c), sont situées à l'extérieur d'un groupe de corps de roulement externes (12d) dans la direction radiale (R) et recouvrent celui-ci par leur segment d'extrémité en direction radiale (R).

2. Unité de palier de roue conforme à la revendication 1, comprenant au moins l'une des caractéristiques suivantes :
la bague interne (12a) du palier de roue (12) est réalisée de manière à s'élargir coniquement dans la direction du centre (6) du véhicule de sorte que le groupe de corps de roulement interne (12c) par rapport au milieu du véhicule (6) roule sur un plus grand diamètre de la bague interne (12a) du palier de roue que le groupe de corps de roulement externe (12d),
le moyeu (11) forme une unité de construction avec la bague du palier de roue externe (12b) et/ou avec le corps d'articulation externe (13c) du joint homocinétique (13).
